# EUROPEAN PATENT APPLICATION

(11) **EP 4 492 484 A1**
(43) Date of publication of application: **15.01.2025**
(21) Application number: 24188134.1
(22) Date of filing: 11.07.2024
(51) Int. Cl.: H01M 4/04, B21D 28/02, H01M 10/04, H01M 10/0585

(54) **RECHARGEABLE BATTERY ELECTRODE SUBSTRATE NOTCHING DEVICE, NOTCHING METHOD AND RECHARGEABLE BATTERY USING THE SAME**

(30) Priority: 13.07.2023 KR 20230091249
(71) Applicant: SAMSUNG SDI CO., LTD., Giheung-gu Yongin-si, Gyeonggi-do 17084 (KR)
(72) Inventor: LEE, Misun, 17084 Yongin-si (KR); RO, Daesung, 17084 Yongin-si (KR); KIM, Donghui, 17084 Yongin-si (KR)
(74) Representative: Marks & Clerk LLP

(57) **Abstract**

A rechargeable battery electrode substrate notching device includes a die (10) and a punch (20) notching an electrode substrate into an electrode having a straight part and a round part by being lifted toward the die while the electrode substrate is installed on the die, wherein the punch includes a round shear (RS) part corresponding to the round part.

## Description

### BACKGROUND

### 1. Field

Embodiments relate to a rechargeable battery electrode substrate notching device, and more particularly, to a rechargeable battery electrode substrate notching device having a shear angle in a notching punch, a notching method, and a rechargeable battery using an electrode.

### 2. Description of the Related Art

A rechargeable battery is a battery performing repeated charging and discharging, unlike a primary battery. A low-capacity rechargeable battery may be used in a small and portable electronic device such as a mobile phone, a laptop computer, or a camcorder. A large-capacity and high-density rechargeable battery may be used as a power source for driving a motor of a hybrid vehicle or that of an electric vehicle or a power source for storing an energy thereof.

The rechargeable battery may include an electrode assembly charging and discharging an electric current, a case or pouch accommodating an electrode assembly and an electrolyte, and an electrode terminal connected to the electrode assembly and taken out to the outside of the case or the pouch. The electrode assembly may be a jelly roll type formed by winding an electrode and a separator, or a stack type formed by stacking the electrode and the separator.

The electrode used in a stack-type rechargeable battery may be manufactured by notching an electrode substrate including a coated part and an uncoated part. A notching device used in a notching process of the electrode substrate may include a lower mold assembly including a die and an upper mold assembly including a punch. The notching device may manufacture the electrode by notching the electrode substrate inserted between the lower mold assembly and the upper mold assembly into a desired shape by using relative lifting and lowering operations of the die and the punch.

An active material may be separated from the electrode substrate in the notching process, and this phenomenon may be referred to as desorption. If the desorption occurs in a notched negative electrode, a capacity ratio N/P of the negative and positive electrodes may be reversed based on the position or size of the desorption. If the desorption occurs in a notched positive electrode, a capacity compared to a design may be reduced.

In addition, the desorbed active material may float in or adhere to equipment and exist as a foreign material in the notched electrode or electrode assembly. In this case, a short circuit defect rate of the electrode assembly may be increased, and an inner foreign material may cause a defect in a voltage deviation value dV of a completed rechargeable battery cell and an abnormal phenomenon in its lifespan.

### SUMMARY

Embodiments include a rechargeable battery electrode substrate notching device. The device includes a die and a punch notching (e.g. configured to notch) an electrode substrate into an electrode having a straight part and a round part by being lifted toward the die while the electrode substrate is installed on the die, wherein the punch includes a round shear part corresponding to the round part.

The punch may further include a straight shear part corresponding to the straight part.

The straight part may include four straight parts and the round part may include four round parts, and the round shear part may be formed on (e.g. may form) at least one of the four round parts.

The straight shear part may be formed on (e.g. may form) at least one of the four straight parts.

The round shear part may have a convex shear angle higher than the straight shear part having the same height as a reference height along the straight part.

The round shear part may have a concave shear angle lower than the straight shear part.

The straight shear part may have a convex shear angle higher than a reference height along the straight part.

The round shear part may have a convex shear angle higher than the reference height along the round part.

The round shear part may have a concave shear angle lower than the reference height along the round part.

The straight shear part may have a concave shear angle lower than a reference height along the straight part.

The round shear part may have a convex shear angle higher than the reference height along the round part.

The round part may include a round shear part, the round shear part having a concave shear angle lower than the reference height along the round part.

Embodiments include a rechargeable battery electrode substrate notching method. The method includes a first step of installing an electrode substrate on a die and a second step of notching the electrode substrate into a stack-type electrode having a straight part and a round part by lifting a punch toward the die, wherein in the second step, the round part may be notched using a round shear part of the punch.

In the second step, the straight part may be further notched using a straight shear part of the punch.

In the second step, the notching may be first performed using the round shear part of the punch that has a convex shear angle higher than the straight shear part having the same height as a reference height along the straight part.

In the second step, the notching may be later performed using the round shear part of the punch that has a concave shear angle lower than the straight shear part.

In the second step, the notching may be performed using the straight shear part that has a convex shear angle higher than a reference height along the straight part.

In the second step, the notching may be performed using the round shear part that has a convex shear angle higher than the reference height along the round part.

In the second step, the notching may be performed using the round shear part that has a concave shear angle lower than the reference height along the round part.

Embodiments include a rechargeable battery. The rechargeable battery includes an electrode assembly formed by stacking a positive electrode and a negative electrode while having a separator disposed therebetween and a pouch accommodating the electrode assembly, wherein the electrode assembly includes an electrode plate and a composite layer disposed on at least one surface of the electrode plate, in a thickness direction, and includes a straight part and a round part in a plane, and the round part has a desorption part larger than zero µm and smaller than 300 µm on the composite layer.

The straight part further may have a desorption part larger than zero µm and smaller than 300 µm on the composite layer.

The composite layer may have an incline formed by a convex shear angle of a round shear part of a punch, and the desorption part may be formed on the electrode plate by following the incline.

The composite layer may have an incline formed by a concave shear angle of a round shear part of a punch, and the desorption part may be formed on the electrode plate by overlapping the incline.

At least some of the above and other features of the invention are set out in the claims.

### BRIEF DESCRIPTION OF THE DRAWINGS

Features will become apparent to those of ordinary skill in the art by describing in detail embodiments with reference to the attached drawings, in which:
FIG. 1 is a cross-sectional view taken along line I-I in FIG. 2, and showing a state before notching which may be a first step while notching an electrode substrate by using a rechargeable battery electrode substrate notching device and a rechargeable battery electrode substrate notching method according to one or more embodiments of the present disclosure;
FIG. 2 is a plan view of a punch used in the rechargeable battery electrode substrate notching device of FIG. 1 according to one or more embodiments of the present disclosure;
FIG. 3 is a cross-sectional view showing a state during notching (or pressing) in a second step following the first step of FIG. 1 according to one or more embodiments of the present disclosure;
FIG. 4 is a cross-sectional view showing a state after notching during the second step that follows FIG. 3 according to one or more embodiments of the present disclosure;
FIG. 5 is a plan view of an electrode notched using the rechargeable battery electrode substrate notching device and the rechargeable battery electrode substrate notching method according to one or more embodiments of the present disclosure;
FIG. 6 is a cross-sectional view showing a state before notching which may be a first step while notching an electrode substrate by using a rechargeable battery electrode substrate notching device and a rechargeable battery electrode substrate notching method according to one or more embodiments of the present disclosure;
FIG. 7 is a cross-sectional view showing a state during notching (or pressing) in a second step following the first step of FIG. 6 according to one or more embodiments of the present disclosure;
FIG. 8 is a cross-sectional view showing a state after notching during the second step that follows FIG. 7 according to one or more embodiments of the present disclosure;
FIG. 9 is a cross-sectional view showing a state before notching which may be a first step while notching an electrode substrate by using a rechargeable battery electrode substrate notching device and a rechargeable battery electrode substrate notching method according to one or more embodiments of the present disclosure;
FIG. 10 is a cross-sectional view showing a state during notching (or pressing) in a second step following the first step of FIG. 9 according to one or more embodiments of the present disclosure;
FIG. 11 is a cross-sectional view showing a state after notching during the second step that follows FIG. 10 according to one or more embodiments of the present disclosure;
FIG. 12 is a cross-sectional view showing a state before notching which may be a first step while notching an electrode substrate by using a rechargeable battery electrode substrate notching device and a rechargeable battery electrode substrate notching method according to one or more embodiments of the present disclosure;
FIG. 13 is a cross-sectional view showing a state during notching (or pressing) in a second step following the first step of FIG. 12 according to one or more embodiments of the present disclosure;
FIG. 14 is a cross-sectional view showing a state after notching during the second step that follows FIG. 13 according to one or more embodiments of the present disclosure;
FIG. 15 is a cross-sectional view of a punch used in a rechargeable battery electrode substrate notching device according to one or more embodiments of the present disclosure;
FIG. 16 is a cross-sectional view of a punch used in a rechargeable battery electrode substrate notching device according to one or more embodiments of the present disclosure;
FIG. 17 is a plan view of an electrode substrate continuously notched using a rechargeable battery electrode substrate notching device and a rechargeable battery electrode substrate notching method according to one or more embodiments of the present disclosure; and
FIG. 18 is an exploded perspective view of a rechargeable battery according to one or more embodiments of the present disclosure.

### DETAILED DESCRIPTION OF THE EMBODIMENTS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that if a layer or element is referred to as being "on" another layer or substrate, it can be directly on the other layer or substrate, or intervening layers may also be present. Further, it will be understood that if a layer is referred to as being "under" another layer, it can be directly under, and one or more intervening layers may also be present. In addition, it will also be understood that if a layer is referred to as being "between" two layers, it can be the only layer between the two layers, or one or more intervening layers may also be present. Like reference numerals refer to like elements throughout.

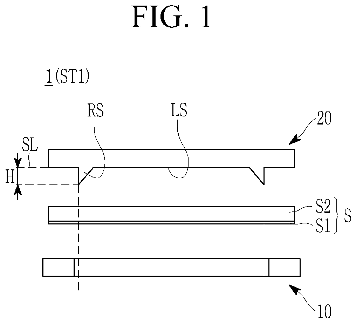

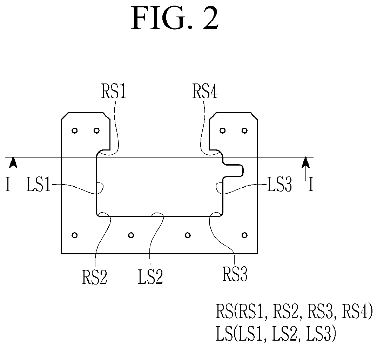

FIG. 1 is a cross-sectional view taken along line I-I in FIG. 2, and showing a state before notching which may be a first step while notching an electrode substrate by using a rechargeable battery electrode substrate notching device and a rechargeable battery electrode substrate notching method according to one or more embodiments of the present disclosure. Referring to FIG. 1, a rechargeable battery electrode substrate notching device 1 according to one or more embodiments includes a die 10 and a punch 20.

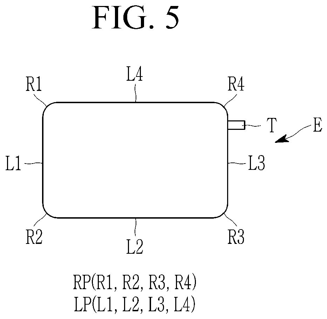

FIG. 2 is a plan view of the punch used in the rechargeable battery electrode substrate notching device 1 of FIG. 1 according to one or more embodiments of the present disclosure; and FIG. 5 is a plan view of an electrode notched using the rechargeable battery electrode substrate notching device 1 and the rechargeable battery electrode substrate notching method according to one or more embodiments of the present disclosure.

Referring to FIGS. 1, 2 and 5, the punch 20 may be configured to notch an electrode substrate S into an electrode E having a straight part LP (L1, L2, L3, or L4) and a round part RP (R1, R2, R3, or R4) by being lifted toward the die 10 while the electrode substrate S may be installed on an upper surface of the die 10.

The electrode substrate S may include an electrode plate S1 and a composite layer S2 installed on at least one surface of the electrode plate S 1, in a thickness direction. Therefore, the notched electrode E may include the notched electrode plate S1 and the composite layer S2.

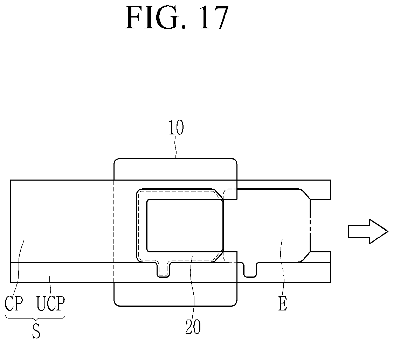

FIG. 17 is a plan view of an electrode substrate continuously notched using a rechargeable battery electrode substrate notching device and a rechargeable battery electrode substrate notching method according to one or more embodiments of the present disclosure. Referring to FIGS. 5 and 17, the electrode substrate S may be released from a reel state and continuously supplied while having a tension between the die 10 and the punch 20.

The electrode substrate S may include a coated part CP disposed in a length direction on its one side in a width direction and an uncoated part UCP disposed in the length direction on the other side in the width direction. The die 10 and the punch 20 may be configured to notch the electrode substrate S into the electrode E, and notch the uncoated part UCP into a tab part T of the electrode E.

Referring back to FIGS. 1, 2, and 5, the punch 20 may be formed to correspond to a shape of the electrode E, which may be a notching target, and the electrode E may include the straight parts LP, that is, the first, second, third, and fourth straight lines L1, L2, L3, and L4 and the round parts RP, that is, the first, second, third, and fourth rounds R1, R2, R3, and R4.

The punch 20 may include a round shear part RS, that is, a first, second, third, or fourth round shear knife RS1, RS2, RS3, or RS4 corresponding to the round part RP (R1, R2, R3, or R4). In addition, the punch 20 may further include a straight shear part LS, that is, a first, second, or third straight shear knife LS1, LS2, or LS3, corresponding to the straight part LP (L1, L2, L3, or L4).

The straight shear parts LS, that is, the first, second, and third straight shear knives LS1, LS2, and LS3 may improve a notching quality at each edge of the straight parts LP and reduce a foreign material occurring in a scrap if notching the straight parts LP of the electrode E, that is, the first, second, third, and fourth straight lines L1, L2, L3, and L4.

The round shear parts RS, that is, the first, second, third, and fourth round shear knives RS1, RS2, RS3, and RS4 may improve the notching quality at each edge of the round parts RP and reduce the foreign material occurring in the scrap if notching the round parts RP of the electrode E, that is, the first, second, third, and fourth rounds R1, R2, R3, and R4.

The round shear parts RS (RS 1, RS2, RS3, and RS4) and the straight shear parts LS (LS1, LS2, and LS3) may suppress the foreign material occurring in a process of notching the electrode substrate S into the electrode E, thereby reducing a short circuit defect, an appearance defect, or a potential defect that causes a defect during use, in an entire process or in a rechargeable battery cell including the electrode E.

The round shear part RS (RS1, RS2, RS3, or RS4) may be formed on (e.g. may form) at least one of the four round parts RP (R1, R2, R3, and R4) of the electrode E. The straight shear part LS (LS1, LS2, or LS3) may be formed on (e.g. may form) at least one of the four straight parts LP (L1, L2, L3, and L4) of the electrode E.

As an example, the electrode E may include the four straight parts LP (L1, L2, L3, and L4) and the four round parts RP (R1, R2, R3, and R4). The round shear parts RS may be formed as the four round shear knives, i.e. the first, second, third, and fourth round shear knives RS1, RS2, RS3, and RS4 corresponding to the four round parts RP (R1, R2, R3, and R4).

The straight shear parts LS may be formed as three straight shear knives, that is, the first, second, and third straight shear knives LS1, LS2, and LS3 corresponding to the three straight parts LP (L1, L2, and L3). The second straight shear knife LS2, one of the straight shear parts LS may notch the fourth straight part L4 of the straight parts LP of the electrode E in the next notching step during the continuous notching process, as shown in FIG. 17, after notching the second straight line L2 of the straight parts LP of the electrode E.

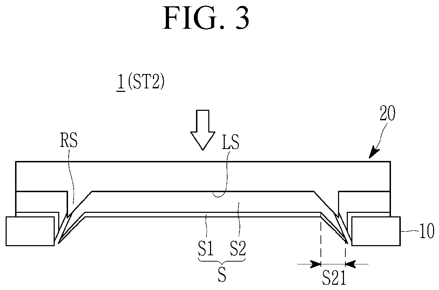

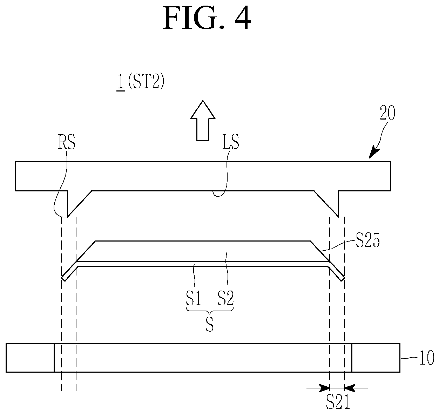

FIG. 3 is a cross-sectional view showing a state during notching (or pressing) in a second step following the first step of FIG. 1 according to one or more embodiments; and FIG. 4 is a cross-sectional view showing a state after notching during the second step that follows FIG. 3 according to one or more embodiments.

Referring to FIGS. 1 to 5, the round shear part RS (RS 1, RS2, RS3, or RS4) of the punch 20 may have a convex shear angle of a height H higher than the straight shear part LS (LS1, LS2, or LS3) having the same height as the reference height SL along the straight part LP (L1, L2, or L3).

The rechargeable battery electrode substrate notching method according to one or more embodiments may include: a first step ST1 (see FIG. 1) of installing the electrode substrate S on the die 10; and a second step ST2 (see FIGS. 3 and 4) of notching the electrode substrate S into the stack-type electrode E having the straight parts LP (L1, L2, and L3) and the round parts RP (R1, R2, R3, and R4) by lifting the punch 20 toward the die 10.

In the second step ST2, the round part RP (R1, R2, R3, or R4) of the electrode E is notched using the round shear part RS (RS1, RS2, RS3, or RS4) of the punch 20. In the second step ST2, the straight part LP (L1, L2, or L3) of the electrode E may be further notched using the straight shear part LS (LS1, LS2, and LS3) of the punch 20. The straight shear part LS (LS1, LS2, or LS3) may have the same height as the reference height SL.

Therefore, in the second step ST2 of the notching process, the round part RP (R1, R2, R3, or R4) of the electrode E may be first notched using the round shear part RS (RS1, RS2, RS3, or RS4) of the punch 20 to have the convex shear angle of the height H higher than the straight shear part LS (LS1, LS2, or LS3).

In the round part RP (R1, R2, R3, or R4) of the electrode E, which may be notched using the round shear part RS (RS1, RS2, RS3, or RS4), the composite layer S2 on the electrode plate S1 that corresponds to the convex shear angle may have a desorption part S21 where a desorption phenomenon occurs.

In more detail, the composite layer S2 may have an incline S25 formed by the convex shear angle of the round shear part RS (RS1, RS2, RS3, RS4) of the punch 20. The desorption part S21 may be formed on the electrode plate S1 by following the incline S25.

The desorption part S21 of the composite layer S2 may be larger than zero µm and smaller than 300 µm (0<S21<300 µm). The desorption part S21 in according to one or more embodiments may be smaller than a desorption part which may be larger than 300 µm that occurs when performing the notching by using a conventional punch without the round shear part RS (RS1, RS2, RS3, or RS4). The minimum desorption part S21 of the composite layer S2 may be the minimization desorption of the active material at the electrode E.

The desorption part S21 may be smaller than a round R (R1, R2, R3, R4) of the round shear part RS (RS 1, RS2, RS3, RS4) may be larger, and the height H of the convex shear angle may be higher. In an example embodiment, the round R may be greater than zero, and less than 10 mm (0<R<10 mm) and the height H of the convex shear angle may be greater than zero and less than 1 mm (0<H<1 mm).

In addition, although not separately shown in the drawings, if the round R and the height H are described with reference to FIG. 4 by being denoted by the same reference numerals as those of the round shear part RS and the round part RP, their relationship may be the same as the relationship between the round shear part RS and the round part RP. That is, in the straight part LP (L1, L2, L3, or L4) of the electrode E, which may be notched using the straight shear part LS (LS1, LS2, or LS3), the composite layer S2 on the electrode plate S1 that corresponds to the convex shear angle may have the desorption part S21 where the desorption phenomenon occurs.

In this case as well, the desorption part S21 of the composite layer S2 may be larger than zero µm and smaller than 300 µm (0<S21<300 µm). The desorption part S21 in one or more embodiments may be smaller than a desorption part which may be larger than 300 µm that occurs when performing the notching by using a conventional punch without the straight shear part LS (LS1, LS2, or LS3). The minimum desorption part S21 of the composite layer S2 may be the minimization desorption of the active material at the electrode E.

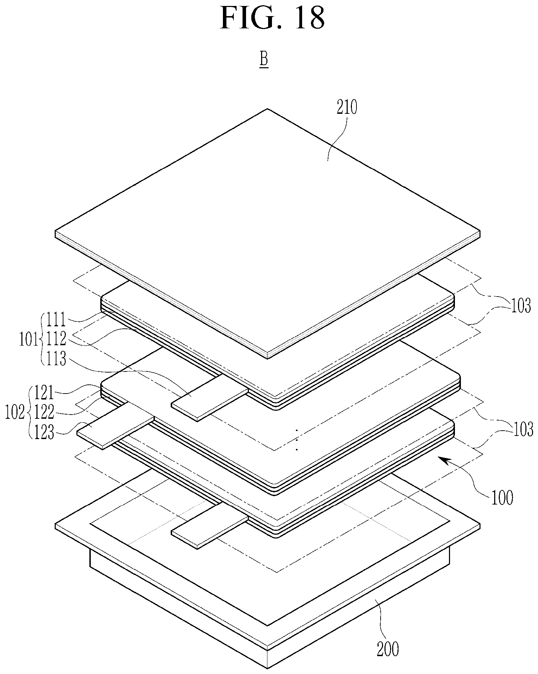

FIG. 18 is an exploded perspective view of a rechargeable battery according to one or more embodiments of the present disclosure. Referring to FIGS. 4 and 18, a rechargeable battery B may include an electrode assembly 100 formed by stacking a positive electrode 101 and a negative electrode 102 while having a separator 103 disposed therebetween, and pouches 200 and 210 accommodating the electrode assembly 100.

The electrode E may include the electrode plate S1 and the composite layer S2 disposed on at least one surface of the electrode plate S1, in the thickness direction. For convenience, referring to FIG. 18, the electrodes 101 and 102 may respectively have the composite layers 112 and 122 on both surfaces of electrode plates 111 and 121, and tabs 113 and 123 on each one side of the electrode plates 111 and 121.

In the electrode E of the rechargeable battery B of one or more embodiments, the composite layer S2 on the electrode plate S1 may have the desorption part S21 where the desorption phenomenon occurs. That is, the composite layer S2 may have the incline S25. The desorption part S21 may be formed on the electrode plate S1 by following the incline S25. The desorption part S21 may be larger than zero µm and smaller than 300 µm (0<S21<300 µm).

Therefore, the rechargeable battery B using the electrodes E (101 or 102) may prevent the capacity ratio N/P of the negative electrode and the positive electrode from being reversed and the capacity compared to the design from being reduced. The rechargeable battery B may minimize the desorbed active material, thus minimizing the foreign material occurring in the notched electrode E (101 or 102) or the electrode assembly 100 including the electrode E (101 or 102).

In this way, the short circuit defect rate of the electrode assembly 100 may be lowered and minimize the defect in the voltage deviation value dV of the completed rechargeable battery B may be minimized, as well as the abnormal phenomenon in its lifespan.

Various other embodiments of the present disclosure will now be described. The description omits a description of the same configuration, and describes a description of the different configuration compared to a first embodiment and other previously described embodiment.

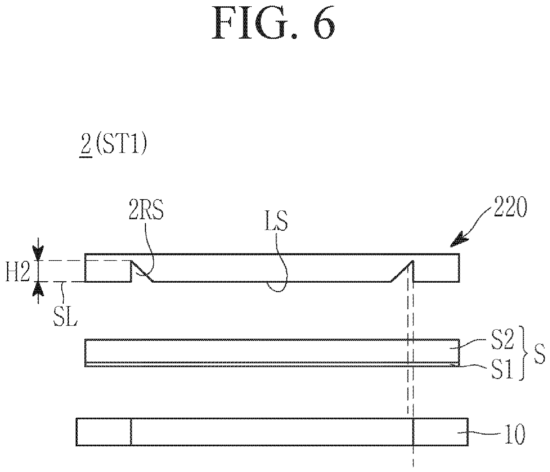

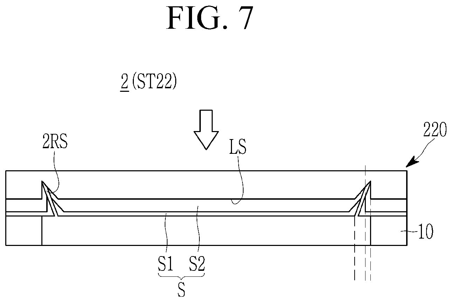

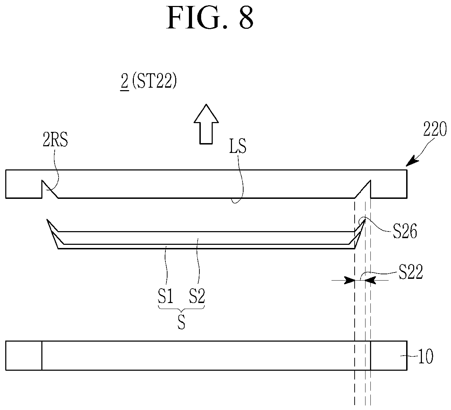

FIG. 6 is a cross-sectional view showing a state before notching, which may be a first step while notching an electrode substrate by using a rechargeable battery electrode substrate notching device and a rechargeable battery electrode substrate notching method according to one or more embodiments of the present disclosure; FIG. 7 is a cross-sectional view showing a state during notching (or pressing) in a second step following the first step of FIG. 6 according to one or more embodiments; and FIG. 8 is a cross-sectional view showing a state after notching during the second step that follows FIG. 7 according to one or more embodiments.

Referring to FIGS. 6 to 8, in a rechargeable battery electrode substrate notching device 2, a round shear part 2RS of a punch 220 may be formed (e.g. may form) along the straight part LP (L1, L2, or L3) (see FIG. 5) while having a concave shear angle lower than the straight shear part LS which may have the same height as the reference height SL.

In a second step ST22 of the rechargeable battery electrode substrate notching method according to one or more embodiments, the straight part LP of the electrode E may be notched using the straight shear part LS of the punch 220. The straight shear part LS may have the same height as the reference height SL. In the second step ST22, the round part RP of the electrode E may be notched using the round shear part 2RS of the punch 220.

Therefore, in the second step ST22 of the notching process, the round part RP of the electrode E may be later notched using the round shear part 2RS of the punch 220 to have the concave shear angle of a depth H2 lower than the straight shear part LS.

In the round part RP of the electrode E, which may be notched using the round shear part 2RS, the composite layer S2 on the electrode plate S1 that corresponds to the concave shear angle may have a desorption part S22 where the desorption phenomenon occurs.

In more detail, the composite layer S2 may have an incline S26 formed by the concave shear angle of the round shear part 2RS of the punch 220. The desorption part S22 may be formed on the electrode plate S1 by overlapping the incline S26.

In some embodiments, the desorption part S22 of the composite layer S2 may be larger than zero µm and smaller than 300 µm (0<S22<300 µm). In other embodiments, the desorption part S22 may be smaller than a desorption part which may be larger than 300 µm that occurs when performing the notching by using the conventional punch without the round shear part RS. The minimum desorption part S22 of the composite layer S2 may be the minimization desorption of the active material at the electrode E.

In the electrode E of the rechargeable battery, the composite layer S2 on the electrode plate S1 may have the desorption part S22 where the desorption phenomenon occurs. That is, the composite layer S2 may have the incline S26. The desorption part S22 may be formed on the electrode plate S1 by overlapping the incline S26. The desorption part S22 may be larger than zero µm and smaller than 300 µm (0<S22<300 µm).

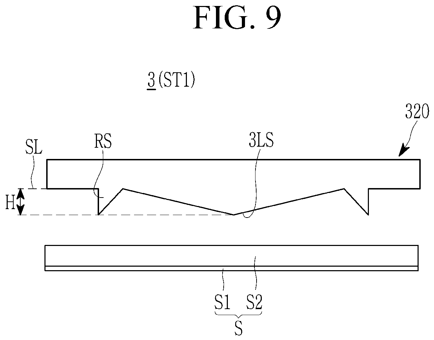

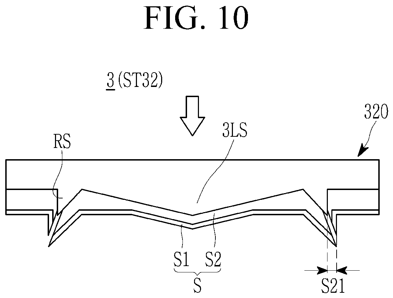

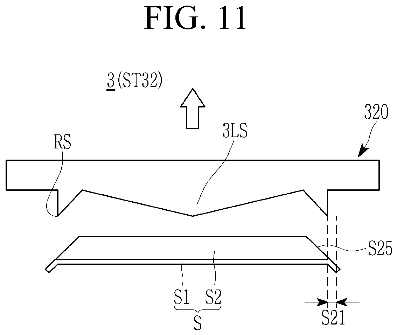

FIG. 9 is a cross-sectional view showing a state before notching, which may be a first step while notching an electrode substrate by using a rechargeable battery electrode substrate notching device and a rechargeable battery electrode substrate notching method according to one or more embodiments of the present disclosure; FIG. 10 is a cross-sectional view showing a state during notching (or pressing) in a second step following the first step of FIG. 9 according to one or more embodiments; and FIG. 11 is a cross-sectional view showing a state after notching during the second step that follows FIG. 10 according to one or more embodiments.

Referring to FIGS. 9 to 11, a rechargeable battery electrode substrate notching device 3 according to one or more embodiments may have a straight shear part 3LS having the convex shear angle, in addition to the notching device 1 of FIGS. 1-5.

In the rechargeable battery electrode substrate notching device 3 in the first step ST1 of FIG. 9, the straight shear part 3LS of a punch 320 may have a convex shear angle of the height H higher than the reference height SL along the straight part LP (L1, L2, or L3). In one or more embodiments, the round shear part RS of the punch 320 may have the convex shear angle of the height H higher than the reference height SL along the round part RP (R1, R2, R3, or R4).

In a second step ST32 of the rechargeable battery electrode substrate notching method according to one or more embodiments, the straight part LP of the electrode E may be notched using the straight shear part 3LS of the punch 320, and the round part RP of the electrode E may be notched simultaneously using the round shear part RS. Each of the straight shear part 3LS and round shear part RS may have the higher height H higher than the reference height SL.

Therefore, in the second step ST32 of the notching process, the straight part LP and round part RP of the electrode E may be notched simultaneously using the straight shear part 3LS and round shear part RS of the punch 320. In the straight part LP and round part RP of the electrode E, which are notched using the straight shear part 3LS and the round shear part RS, the composite layer S2 on the electrode plate S1 that corresponds to the convex shear angle may have the desorption part S21 where the desorption phenomenon occurs.

In more detail, the composite layer S2 may have the incline S25 formed by the convex shear angle of the straight shear part 3LS and round shear part RS of the punch 320. The desorption part S21 may be formed on the electrode plate S1 by following the incline S25.

In some embodiments, the desorption part S21 of the composite layer S2 may be larger than zero µm and smaller than 300 µm (0<S21<300 µm). In other embodiments, the desorption part S21 may be smaller than a desorption part which may be larger than 300 µm that occurs when performing the notching by using the conventional punch without the straight shear part 3LS or the round shear part RS. The minimum desorption part S21 of the composite layer S2 may be the minimization desorption of the active material at the electrode E.

At the straight part LP and round part RP of the electrode E in the rechargeable battery of one or more embodiments, the composite layer S2 on the electrode plate S1 may have the desorption part S21 where the desorption phenomenon occurs. That is, the composite layer S2 may have the incline S25. The desorption part S21 may be formed on the electrode plate S1 by following the incline S25. The desorption part S21 may be larger than zero µm and smaller than 300 µm (0<S21<300 µm).

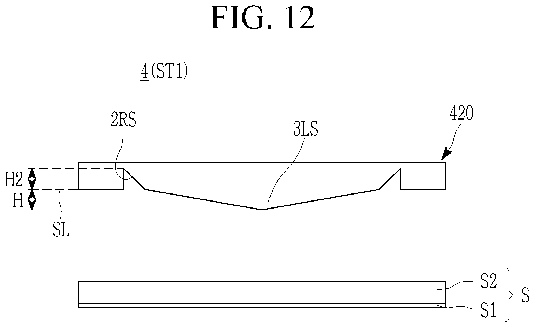

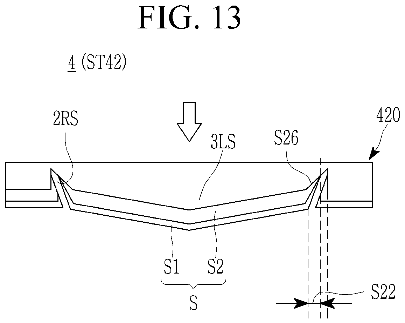

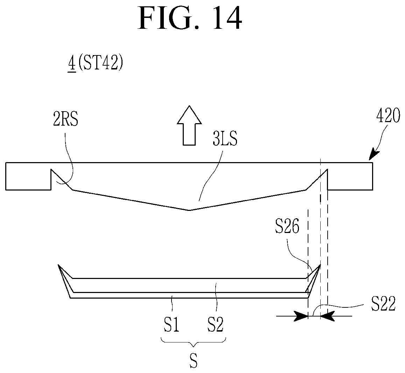

FIG. 12 is a cross-sectional view showing a state before notching, which may be a first step while notching an electrode substrate by using a rechargeable battery electrode substrate notching device and a rechargeable battery electrode substrate notching method according to one or more embodiments of the present disclosure; FIG. 13 is a cross-sectional view showing a state during notching (or pressing) in a second step following the first step of FIG. 12 according to one or more embodiments; and FIG. 14 is a cross-sectional view showing a state after notching during the second step that follows FIG. 13 according to one or more embodiments.

Referring to FIGS. 12 to 14, a rechargeable battery electrode substrate notching device 4 may have the straight shear part 3LS having the convex shear angle, in addition to the notching device 2 of FIGS. 6-8.

In the rechargeable battery electrode substrate notching device 4 of FIGS, 12-14, the straight shear part 3LS of a punch 420 may have a convex shear angle of the height H higher than the reference height SL along the straight part LP (L1, L2, or L3). The round shear part 2RS of the punch 420 may have a concave shear angle of a height H2 lower than the reference height SL along the round part RP (R1, R2, R3, or R4).

In a second step ST42 of the rechargeable battery electrode substrate notching method according to FIGS. 12-14, the straight part LP of the electrode E may be first notched using the straight shear part 3LS of the punch 420, and the round part RP of the electrode E may be later notched using the round shear part 2RS. The straight shear part 3LS may have the height H higher than the reference height SL, and the round shear part 2RS may have the depth H2 lower than the reference height SL.

Therefore, in the second step ST42 of the notching process, the straight part LP of the electrode E may be first notched using the straight shear part 3LS of the punch 420 and the round part RP may be later notched using the round shear part RS. In the straight part LP of the electrode E, which may be notched using the straight shear part 3LS, the composite layer S2 on the electrode plate S1 that corresponds to the convex shear angle may have the desorption part S22 where the desorption phenomenon occurs.

In the round part RP of the electrode E, which may be notched using the round shear part 2RS, the composite layer S2 on the electrode plate S1 that corresponds to the concave shear angle may have the desorption part S22 where the desorption phenomenon occurs.

In more detail, the composite layer S2 may have the incline S25 formed by the convex shear angle of the straight shear part 3LS of the punch 420 (see FIG. 4). The incline in the cross-sectional view may be formed by cutting the convex shear angle of the straight shear part 3LS and may have the same structure as that of the incline S25 in the cross-sectional view acquiring by cutting the convex shear angle of the round shear part RS in FIG. 4. The desorption part S21 may be formed on the electrode plate S1 by following the incline S25. The incline S26 may be formed by the concave shear angle of the round shear part 2RS. The desorption part S22 may be formed on the electrode plate S1 by overlapping the incline S26 (see FIGS. 8 and 14).

The desorption part S21 or S22 of the composite layer S2 may be larger than zero µm and smaller than 300 µm (0<S21<300 µm, 0<S22<300 µm). In some embodiments, the desorption part S21 or S22 may be smaller than a desorption part which may be larger than 300 µm that occurs when performing the notching by using a conventional punch without the straight shear part 3LS or the round shear part 2RS. The minimum desorption part S21 or S22 of the composite layer S2 may be the minimization desorption of the active material at the electrode E.

At the straight part LP and round part RP of the electrode E in the rechargeable battery of one or more embodiments, the composite layer S2 on the electrode plate S1 may have the desorption parts S21 and S22 where the desorption phenomenon occurs. That is, the composite layer S2 may have the inclines S25 and S26. The desorption part S21 may be formed on the electrode plate S1 by following the incline S25. The desorption part S22 may be formed on the electrode plate S1 by overlapping the incline S26. The desorption part S21 or S22 may be larger than zero µm and smaller than 300 µm (0<S21<300 µm, 0<S22<300 µm). However, this is merely one example and the size of the desorption part S21 or S22 may vary.

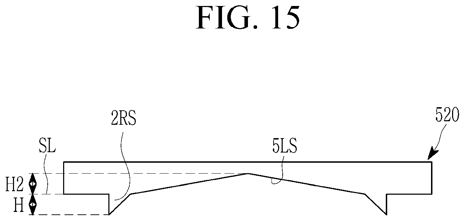

FIG. 15 is a cross-sectional view of a punch used in a rechargeable battery electrode substrate notching device according to one or more embodiments of the present disclosure. Referring to FIG. 15, a punch 520 of the rechargeable battery electrode substrate notching device may have a straight shear part 5LS having a concave shear angle, in addition to the punch 20 of the notching device 1 of FIGS. 1-5.

In the notching device of FIG. 15, the straight shear part 5LS of the punch 520 may have the concave shear angle of the depth H2 lower than the reference height SL along the straight part LP (L1, L2, or L3). As with FIGS. 1-5, the round shear part RS of the punch 520 may have the convex shear angle of the height H higher than the reference height SL along the round part RP (R1, R2, R3, or R4).

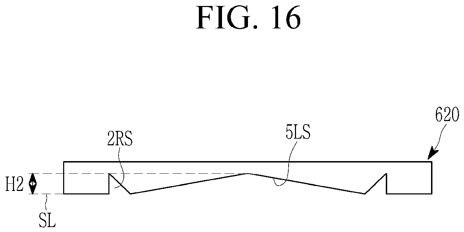

FIG. 16 is a cross-sectional view of a punch used in a rechargeable battery electrode substrate notching device according to one or more embodiments of the present disclosure. Referring to FIG. 16, a punch 620 of the rechargeable battery electrode substrate notching device may have the straight shear part 5LS having the concave shear angle, in addition to the punch 220 of the notching device 2 of FIGS. 6-8.

In the notching device of FIG. 16, the straight shear part 5LS of the punch 620 may have the concave shear angle of the depth H2 lower than the reference height SL along the straight part LP (L1, L2, or L3). As in the embodiment of FIGS. 6-8, the round shear part 2RS of the punch 620 may have the concave shear angle of the height H2 lower than the reference height SL along the round part RP (R1, R2, R3, or R4).

As set forth above, embodiments of the present disclosure may apply the shear angle, that is, the round shear part of the punch to the round region that corresponds to the round part of the electrode to thus minimize the desorption of the active material in the round part of the electrode, thereby preventing the capacity ratio N/P of the negative electrode and the positive electrode from being reversed and the capacity compared to the design from being reduced.

Embodiments of the present disclosure may apply the shear angle, that is, the straight shear part of the punch to the straight region that corresponds to the straight part of the electrode to minimize the desorption of the active material in the straight part of the electrode, thereby preventing the capacity ratio N/P of the negative electrode and the positive electrode from being reversed and the capacity compared to the design from being reduced.

Embodiments of the present disclosure may minimize the active material desorbed from at least one side of the round part or straight part of the electrode, thereby minimizing the foreign material in the notched electrode or electrode assembly. In this way, an embodiment may lower the short circuit defect rate of the electrode assembly and minimize the defect in the voltage deviation value dV of the completed rechargeable battery cell and the abnormal phenomenon in its lifespan.

Although the embodiments of the present disclosure have been described, it is to be understood that the present disclosure is not limited to the disclosed embodiments. Various modifications may be made within the scopes of the claims, the description of the present disclosure and the accompanying drawings, which also fall within the scope of the present disclosure.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### <Description of symbols>

| | | | |
|---|---|---|---|
| 1, 2, 3, 4: | notching device | 10: | die |
| 20: | punch | 100: | electrode assembly |
| 101, 102: | electrode | 103: | separator |
| 111, 121: | electrode plate | 112, 122: | composite layer |
| 113, 123: | tap | 200, 210: | pouch |
| 220: | punch | 320: | punch |
| 420: | punch | 520: | punch |
| 620: | punch | CP: | coated part |
| E: | electrode | H: | height |
| H2: | depth | L1, L2, L3, L4: | first, second, third, fourth straight line |
| LP: | straight part | LS, 3LS, 5LS: | straight shear part |
| LS1, LS2, LS3: | first, second, third straight shear knife | | |
| R1, R2, R3, R4: | first, second, third, fourth round | | |
| RP: | round part | RS, 2RS: | round shear part |
| RS1, RS2, RS3, RS4: | first, second, third, fourth round shear knife | | |
| S: | electrode substrate | SL: | reference height |
| S1: | electrode plate | S2: | composite layer |
| S21, S22: | desorption part | S25: | incline |
| S26: | incline | T: | tap |
| UCP: | uncoated part | | |

The present invention will now be defined with reference to the following clauses.
Clause 1. A rechargeable battery electrode substrate notching device comprising:
   a die; and
   a punch notching an electrode substrate into an electrode having a straight part and a round part by being lifted toward the die while the electrode substrate is installed on the die, wherein the punch includes and a round shear part corresponding to the round part.
Clause 2. The device of clause 1, wherein the punch further includes a straight shear part corresponding to the straight part.
Clause 3. The device of clause 1 or clause 2, wherein
   the electrode includes four straight parts and four round parts, and
   the round shear part is formed on at least one of the four round parts.
Clause 4. The device of clause 3, wherein the straight shear part is formed on at least one of the four straight parts.
Clause 5. The device of clause 2, wherein the round shear part has a convex shear angle higher than the straight shear part having the same height as a reference height along the straight part.
Clause 6. The device of clause 2, wherein the round shear part has a concave shear angle lower than the straight shear part.
Clause 7. The device of clause 2, wherein the straight shear part has a convex shear angle higher than a reference height along the straight part.
Clause 8. The device of clause 7, wherein the round shear part has a convex shear angle higher than the reference height along the round part.
Clause 9. The device of clause 7, wherein the round shear part has a concave shear angle lower than the reference height along the round part.
Clause 10. The device of clause 2, wherein the straight shear part has a concave shear angle lower than a reference height along the straight part.
Clause 11. The device of clause 10, wherein the round shear part has a convex shear angle higher than the reference height along the round part.
Clause 12. The device of clause 10, wherein the round shear part has a concave shear angle lower than the reference height along the round part.
Clause 13. A rechargeable battery electrode substrate notching method comprising:
   a first step of installing an electrode substrate on a die; and
   a second step of notching the electrode substrate into a stack-type electrode having a straight part and a round part by lifting a punch toward the die,
   wherein in the second step,
   the round part is notched using a round shear part of the punch.
Clause 14. The method of clause 13, wherein in the second step, the straight part is further notched using a straight shear part of the punch.
Clause 15. The method of clause 14, wherein in the second step, the notching is first performed using the round shear part of the punch that has a convex shear angle higher than the straight shear part having the same height as a reference height along the straight part.
Clause 16. The method of clause 14 or clause 15, wherein in the second step, the notching is later performed using the round shear part of the punch that has a concave shear angle lower than the straight shear part.
Clause 17. The method of clause 14, wherein in the second step, the notching is performed using the straight shear part that has a convex shear angle higher than a reference height along the straight part.
Clause 18. The method of clause 17, wherein in the second step, the notching is performed using the round shear part that has a convex shear angle higher than the reference height along the round part.
Clause 19. The method of clause 17, wherein in the second step, the notching is performed using the round shear part that has a concave shear angle lower than the reference height along the round part.
Clause 20. A rechargeable battery comprising:
   an electrode assembly formed by stacking a positive electrode and a negative electrode on both surfaces while having a separator disposed therebetween; and
   a pouch accommodating the electrode assembly,
   wherein the electrode includes
      an electrode plate and a composite layer disposed on at least one surface of the electrode plate, in a thickness direction, and includes a straight part and a round part in a plane, and
      the round part has a desorption part larger than zero µm and smaller than 300 µm (0<S21<300 µm) on the composite layer.
Clause 21. The battery of clause 20, wherein the straight part further has a desorption part larger than zero µm and smaller than 300 µm on the composite layer (0<S21<300 µm).
Clause 22. The battery of clause 20 or clause 21, wherein
   the composite layer has an incline formed by a convex shear angle of a round shear part of the punch, and
   the desorption part is formed on the electrode plate by following the incline.
Clause 23. The battery of clause 20 or clause 21, wherein
   the composite layer has an incline formed by a concave shear angle of a round shear part of the punch, and
   the desorption part is formed on the electrode plate by overlapping the incline.

## Claims

1. A rechargeable battery electrode substrate notching device, comprising:
a die; and
a punch configured to notchg an electrode substrate into an electrode having a straight part and a round part by being lifted toward the die while the electrode substrate is installed on the die, wherein the punch includes a round shear part corresponding to the round part,
wherein the punch further includes a straight shear part corresponding to the straight part.

2. The device as claimed in claim 1, wherein
the straight part includes four straight parts and wherein the round part includes four round parts,
the round shear part forms at least one of the four round parts, and
the straight shear part forms at least one of the four straight parts.

3. The device as claimed in claim 1 or claim 2, wherein the round shear part has a convex shear angle higher than the straight shear part having the same height as a reference height along the straight part.

4. The device as claimed in claim 1 or claim 2, wherein the round shear part has a concave shear angle lower than the straight shear part.

5. The device as claimed in claim 1 or claim 2, wherein the straight shear part has a convex shear angle higher than a reference height along the straight part, optionally wherein:
(i) the round shear part has a convex shear angle higher than the reference height along the round part; or
(ii) the round shear part has a concave shear angle lower than the reference height along the round part.

6. The device as claimed in claim 1 or claim 2, wherein the straight shear part has a concave shear angle lower than a reference height along the straight part, optionally wherein:
(i) the round shear part has a convex shear angle higher than the reference height along the round part; or
(ii) the round shear part has a concave shear angle lower than the reference height along the round part.

7. A rechargeable battery electrode substrate notching method, comprising:
a first step of installing an electrode substrate on a die; and
a second step of notching the electrode substrate into a stack-type electrode having a straight part and a round part by lifting a punch toward the die,
wherein in the second step,
the round part is notched using a round shear part of the punch, and
the straight part is further notched using a straight shear part of the punch.

8. The method as claimed in claim 7, wherein in the second step, the notching is first performed using the round shear part of the punch that has a convex shear angle higher than the straight shear part having the same height as a reference height along the straight part.

9. The method as claimed in claim 7 or claim 8, wherein in the second step, the notching is later performed using the round shear part of the punch that has a concave shear angle lower than the straight shear part.

10. The method as claimed in claim 7, wherein in the second step, the notching is performed using the straight shear part that has a convex shear angle higher than a reference height along the straight part, optionally wherein:
(i) in the second step, the notching is performed using the round shear part that has a convex shear angle higher than the reference height along the round part; or
(ii) wherein in the second step, the notching is performed using the round shear part that has a concave shear angle lower than the reference height along the round part.

11. A rechargeable battery comprising:
an electrode assembly formed by stacking a positive electrode and a negative electrode while having a separator disposed therebetween; and
a pouch accommodating the electrode assembly,
wherein the electrode assembly includes:
an electrode plate and a composite layer disposed on at least one surface of the electrode plate, in a thickness direction, and includes a straight part and a round part in a plane, and
the round part has a desorption part larger than zero µm and smaller than 300 µm on the composite layer.

12. The battery as claimed in claim 11, wherein the straight part further has a desorption part larger than zero µm and smaller than 300 µm on the composite layer.

13. The battery as claimed in claim 11 or claim 12, wherein
the composite layer has an incline formed by a convex shear angle of a round shear part of a punch, and
the desorption part is formed on the electrode plate by following the incline.

14. The battery as claimed in claim 11 or claim 12, wherein
the composite layer has an incline formed by a concave shear angle of a round shear part of a punch, and
the desorption part is formed on the electrode plate by overlapping the incline.
